# EUROPÄISCHE PATENTSCHRIFT

(11) **EP 1 871 639 B1**
(45) Veröffentlichungstag und Bekanntmachung des Hinweises auf die Patenterteilung: **10.03.2010**
(21) Anmeldenummer: 05766043.3
(22) Anmeldetag: 18.06.2005
(51) Int. Cl.: B60N 2/56, B60H 1/00

(54) **LUFTVERSORGUNGSEINRICHTUNG FÜR EINEN FAHRZEUGSITZ SOWIE VERFAHREN ZUM BETREIBEN DERSELBEN**
AIR SUPPLY MECHANISM FOR A VEHICLE SEAT, AND METHOD FOR THE OPERATION THEREOF
DISPOSITIF D'ALIMENTATION EN AIR POUR SIEGE DE VEHICULE, ET PROCEDE POUR FAIRE FONCTIONNER CE DISPOSITIF

(30) Priorität: 25.06.2004 DE 102004030707
(43) Veröffentlichungstag der Anmeldung: 02.01.2008
(73) Patentinhaber: Daimler AG, 70327 Stuttgart (DE)
(72) Erfinder: HARTMANN, Dietmar, 71131 Jettingen (DE); PFAHLER, Karl, 70180 Stuttgart (DE); RENNER, Lothar, 71154 Nufringen (DE)
(74) Vertreter: JENSEN & SON
(86) Internationale Anmeldenummer: PCT/EP2005/006614
(87) Internationale Veröffentlichungsnummer: WO 2006/000363

(56) Entgegenhaltungen:
- WO-A-03/106215
- DE-A1- 19 936 755
- GB-A- 2 273 212
- US-A- 4 538 760

## Beschreibung

Die Erfindung betrifft eine Luftversorgungseinrichtung für einen Fahrzeugsitz nach dem Oberbegriff von Patentanspruch 1 sowie ein Verfahren zum Betreiben derselben.

Aus der DE 102 26 008 A1 ist eine Luftversorgungseinrichtung entsprechend dem Oberbegriff des Anspruchs 1 und des Anspruchs 6 für einen Fahrzeugsitz eines offenen Kraftfahrzeugs mit wenigstens einer im oberen Bereich des Fahrzeugsitzes vorgesehenen Luftausströmöffnung, über die der Kopf-, Schulter- und Nackenbereich des Sitzinsassen zur Verminderung von unerwünschten Zuglufterscheinungen mit einem Luftstrom beaufschlagbar ist, bekannt. Dabei ist der Luftstrom mittels einer Steuereinrichtung regelbar und wird bei eingeschalteter Luftversorgungseinrichtung in Abhängigkeit von einem automatisch erfassten äußeren Parameterwert, beispielsweise einer Außentemperatur, oder einem vom Sitzinsassen wählbaren Vorgabewert auf einen zugeordneten Grundwert eingestellt, von dem aus eine weitere Einstellung des Luftstroms in Abhängigkeit von einem automatisch erfassten weiteren Parameterwert, beispielsweise der Fahrgeschwindigkeit erfolgt. Die beiden Parameterwerte dienen zur Einstellung eines niedrigen, mittleren oder hohen Grundwerts des Luftstroms, der bestimmt ist durch eine zugeordnete Lüfterdrehzahl des Gebläses und eine zugeordnete Heizleistung des Heizelements. Ausgehend von diesem Grundwert erfolgt die Einstellung des Luftstroms dann in Abhängigkeit von der Fahrgeschwindigkeit derart, dass bei ansteigender Fahrgeschwindigkeit der Luftstrom und damit die Lüfterdrehzahl und die Heizleistung des Heizelements erhöht wird und umgekehrt.

Bei dem vorstehend beschriebenen herkömmlichen Fahrzeugsitz mit Sitzheizung und Belüftungsvorrichtung (Luftversorgungseinrichtung) besteht jedoch das Problem, dass bei einem Einschalten der Luftversorgungseinrichtung Sitzheizung und Belüftungsvorrichtung aktiviert werden und dadurch unmittelbar nach dem Einschalten kühlere Luft an Schulter und Nackenbereich des Sitzinsassen gelangen, da das Heizelement noch nicht die volle Heizleistung besitzt, was zu einem Zugempfinden beim Sitzinsassen und damit zu einer Komforteinbuße führt.

Weiterhin ist aus der DE 198 42 979 C1 ein Fahrzeugsitz mit Sitzheizung und Belüftungsvorrichtung bekannt, bei das Steuergerät bei jedem Einschalten der Sitzheizung zugleich die Belüftungseinrichtung für eine festgelegte Zeitspanne nach dem Einschalten der Sitzheizung aktiviert. Dabei werden die Sitzheizung und die Belüftungsvorrichtung mit voller Leistung eingeschaltet und die Leistung der Belüftungsvorrichtung wird innerhalb der Zeitspanne asymptotisch auf einen vorgegebenen Endwert reduziert. Dieser Endwert kann entweder Null sein oder ein je nach Wärmeempfinden manuell vorgegebener Wert. Dadurch wird eine gezielte Kombination von Sitzbeheizen und Sitzbelüften in der Aufheizphase des Fahrzeugsitzes erreicht, durch die die Aufheizgeschwindigkeit des Polsters gegenüber der reinen Sitzbeheizung verdoppelt wird. Die Sitzheizung besteht aus einer Mehrzahl von elektrischen Heizdrähten, die in einer Bezugsfüllung des Polsters eingelegt sind. Die Belüftungsvorrichtung weist eine Mehrzahl von Miniaturlüftern auf, die in im Polster integrierten Luftkanälen angeordnet sind und Luft aus dem unterhalb des Fahrzeugsitzes befindlichen Bereich des Fahrzeuginnenraums ansaugen und in eine Ventilationsschicht des Polsters, die unterhalb der Bezugsfüllung liegt, einblasen.

Die DE 197 03 516 C1 offenbart einen Fahrzeugsitz mit Sitzheizung und Belüftungsvorrichtung, bei dem das Steuergerät eingangsseitig mit einem im Polster angeordneten Temperaturfühler und ausgangsseitig mit der Sitzheizung und der Belüftungsvorrichtung verbunden ist. Die Belüftungsvorrichtung wiest eine Mehrzahl von in einer Polsterauflage integrierten Miniaturlüftern auf, die Luft aus dem unterhalb des Fahrzeugsitzes befindlichen Bereich des Fahrzeuginnenraums ansaugen und in eine die Polsterauflage überspannende Ventilationsschicht aus einem Abstandsgewirk einblasen. Die Sitzheizung besteht aus einer Mehrzahl von Heizwendeln, die jeweils einem Miniaturlüfter zugeordnet und mit diesem in jeweils einem Luftkanal angeordnet sind, der in der Polsterauflage ausgebildet ist. Das Steuergerät steuert die Belüftungsvorrichtung und die Sitzheizung abhängig von einer aktuellen Polstertemperatur und einer vorgegebenen Soll-Polstertemperatur in verschiedenen Kombinationen von Lüfter- und Heizstufen an.

Bei einem aus der DE 199 53 385 A1 bekannten Fahrzeugsitz mit Sitzheizung und Belüftungseinrichtung ist eine Bedieneinrichtung zur manuellen Betätigung der Sitzheizung und der Belüftungseinrichtung vorgesehen. Bei manuell eingeschalteter Belüftungseinrichtung regelt das Steuergerät die Sitzheizung automatisch in Abhängigkeit von der Temperatur der Sitzoberfläche. Die Belüftungsvorrichtung und die Sitzheizung sind mittels der Bedieneinrichtung stufenweise und/oder stufenlos schaltbar. Die Regelung erfolgt innerhalb der vom Benutzer über die Bedieneinrichtung einstellten definierten Grenzen. Zusätzlich wird sichergestellt, dass keine Unterkühlung durch die Belüftungseinrichtung erfolgt, indem bei eingeschalteter Belüftungseinrichtung die Heizeinrichtung zur Beheizung des Fahrzeugsitzes automatisch in Abhängigkeit von der Sitzoberflächentemperatur geregelt wird.

Auch bei diesen herkömmlichen Fahrzeugsitzen mit Sitzheizung und Belüftungsvorrichtung entsteht beim Sitzinsassen aufgrund der Tatsache, dass das Heizelement bei Einschalten von Sitzheizung und Belüftungsvorrichtung noch nicht die volle Heizleistung besitzt, ein Zugempfinden, insbesondere in dem Fall, in dem die Belüftungsvorrichtung zunächst auf der höchsten Stufe betrieben und dann langsam auf einen vorgegebenen Wert heruntergeschaltet wird.

Daher ist es Aufgabe der vorliegenden Erfindung, eine Luftversorgungseinrichtung für einen Fahrzeugsitz sowie ein Verfahren zum Betreiben derselben derart weiterzubilden, dass auch unmittelbar nach dem Einschalten der Luftversorgungseinrichtung kein Zugempfinden beim Sitzinsassen auftritt.

Erfindungsgemäß wird diese Aufgabe durch eine Luftversorgungseinrichtung für einen Fahrzeugsitz mit den Merkmalen von Patentanspruch 1 sowie ein Verfahren zum Betreiben einer Luftversorgungseinrichtung für einen Fahrzeugsitz mit den Merkmalen von Patentanspruch 6 gelöst. In den Unteransprüchen sind vorteilhafte Weiterbildungen der Erfindung angegeben.

Durch die erfindungsgemäße Anlaufsteuerung des Gebläses unmittelbar nach dem Einschalten der Luftversorgungseinrichtung für einen Fahrzeugsitz wird erreicht, dass der Sitzinsasse kein anfängliches Zugempfinden aufgrund stark ausströmender relativ kalter Luft empfindet, sondern schon unmittelbar nach dem Einschalten eine angenehme Wärme verspürt.

Diese und weitere Aufgaben, Merkmale und Vorteile der vorliegenden Erfindung werden aus der nachfolgenden Beschreibung eines bevorzugten Ausführungsbeispiels in Verbindung mit der Zeichnung offensichtlich.

Dabei zeigen:
- Fig. 1: eine schematische Perspektivansicht auf Teile einer Rückenlehne eines Fahrzeugsitzes, in die eine Luftversorgungsseinrichtung integriert ist,
- Fig. 2: eine erfindungsgemäße Gebläsekennlinie,
- Fig. 3: ein Ablaufdiagramm eines erfindungsgemäßen Verfahrens zum Betreiben einer Luftversorgungseinrichtung für einen Fahrzeugsitz und
- Fig. 4: ein Ablaufdiagramm der in Fig. 3 gezeigten erfindungsgemäßen Anlaufsteuerung des Gebläses.

Nachfolgend wird nun die erfindungsgemäße Luftversorgungseinrichtung für einen Fahrzeugsitz und das erfindungsgemäße Verfahren zum Betreiben derselben anhand eines bevorzugten Ausführungsbeispiels näher beschrieben.

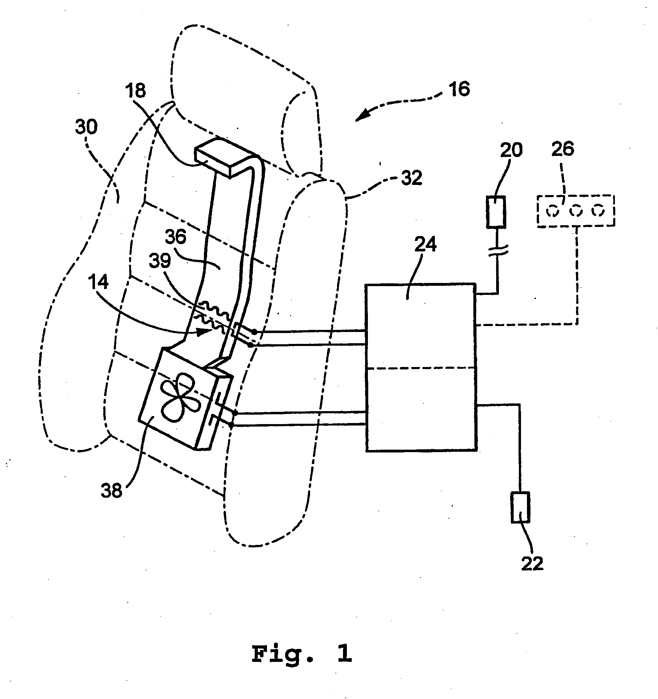

In Fig. 1 sind in schematischer Perspektivansicht Teile einer Rückenlehne 16 eines Fahrzeugsitzes 12 dargestellt, in die eine Luftversorgungseinrichtung 14 integriert ist. Von der Rückenlehne 16 des Fahrzeugsitzes 12 sind ein Lehnenrahmen 30 und eine rückwärtige Verkleidung 32 erkennbar. Innerhalb der Rückenlehne 16 ist eine Kanalanordnung 36 der Luftversorgungseinrichtung 14 angeordnet. Der Kanalanordnung 36 ist ein von einem Gehäuse aufgenommenes Gebläse 38 vorgeschaltet, dessen Luftansaugung an der Rückseite der Rückenlehne 16 erfolgt. Außerdem ist innerhalb der Kanalanordnung 36 ein dem Gebläse 38 nachgeschaltetes Heizelement 39 angeordnet, das über eine Steuereinrichtung 24 steuerbar ist und mit dem der Luftstrom der Luftversorgungseinrichtung 14 temperiert werden kann. Im Bereich der in Fig. 1 nicht gezeigten Kopfstütze mündet die Kanalanordnung 36 in eine Luftausströmöffnung 18, durch die der temperierte Luftstrom in Richtung des Kopf-, Schulter- und Nackenbereichs des Sitzinsassen austritt, um die beispielsweise beim Fahren mit offenem Verdeck entstehenden Zuglufterscheinungen erheblich zu vermindern. Die Luftausströmöffnung 18 endet etwa flächenbündig integriert an der Vorderseite der Kopfstütze.

Die Luftversorgungseinrichtung 14 ist sowohl mit einem Sensor 20 zum Erfassen der Außentemperatur als auch mit einem Sensor 22 zum Erfassen der Fahrgeschwindigkeit verbunden. Die beiden Sensoren 20, 22 sind mit der beispielsweise innerhalb des Fahrzeugsitzes 12 angeordneten Steuereinrichtung 24 verbunden, über die die Regelung des aus der Luftausströmöffnung 18 austretenden Luftstroms auf im weiteren noch beschriebene Weise erfolgt. Zudem ist im Innenraum des Kraftwagens eine Regelungseinrichtung 26 vorgesehen, die mit der Steuereinrichtung 24 verbunden ist und über die der Sitzinsasse eine nachfolgend noch beschriebene Einstellung des Luftstroms vornehmen kann. Das Erfassen der Fahrgeschwindigkeit erfolgt in dem hier gezeigten Ausführungsbeispiel durch ein ohnehin vorhandenes ABS-Steuergerät, das die momentane Fahrgeschwindigkeit in ein elektronisches Signal umwandelt und an die Steuereinrichtung 24 übermittelt. Das Erfassen der Außentemperatur kann durch einen ohnehin vorhandenen Temperatursensor 20 zum Anzeigen der Temperatur im Cockpit erfolgen, wobei die Temperatur in ein elektronisches Signal umgewandelt und an die Steuereinrichtung 24 im Fahrzeugsitz 12 übermittelt wird.

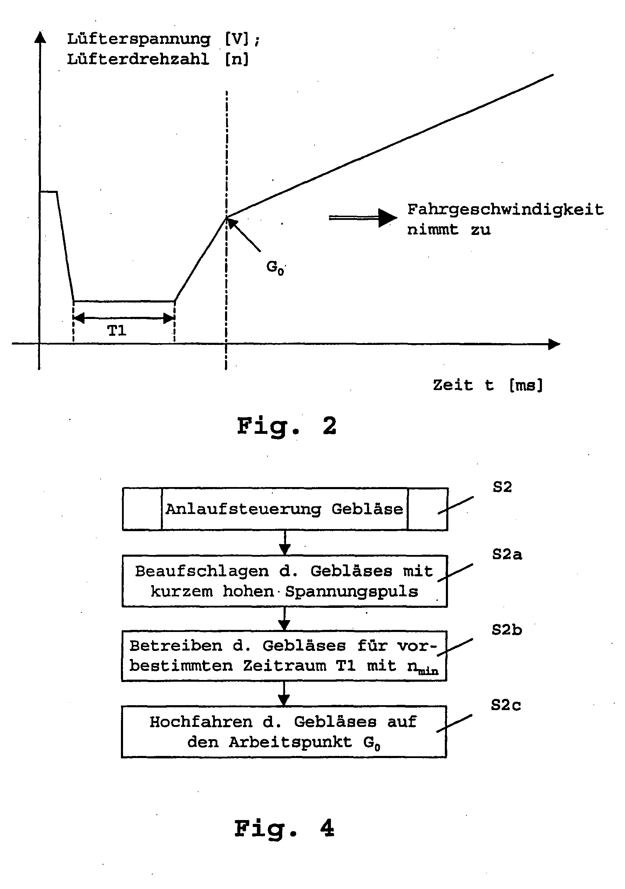

Sobald die Steuereinrichtung 24 ein Einschaltsignal für die Luftversorgungseinrichtung, beispielsweise manuell aufgrund einer Schalterbetätigung durch den Insassen, empfängt, wird einerseits das Heizelement 39 eingeschaltet und gleichzeitig das Gebläse 38 entsprechend der in Fig. 2 gezeigten Gebläsekennlinie angesteuert. Dabei wird das Gebläse 38, wie aus Fig. 2 ersichtlich, mittels eines hohen, kurzen Spannungspulses gestartet. Dieser hohe kurze Spannungspuls kann beispielsweise 3V betragen und 0,5s andauern und ist ausreichend, um das Gebläse zum Anlaufen zu bringen. Anschließend wird die Spannung wieder deutlich bis auf ein Betriebsminimum, von beispielsweise 1V, abgesenkt und für einen vorbestimmten Zeitraum T1, beispielsweise 20s, darauf gehalten, so dass nur eine minimal mögliche Lüfterdrehzahl nₘᵢₙ erhalten wird. Nach Ablauf dieses Zeitraums wird die Betriebsspannung dann bis zu einem vorbestimmten Arbeitspunkt G₀ hochgefahren. Der vorbestimmte Arbeitspunkt G₀ kann dabei durch die Steuereinrichtung anhand eines automatisch erfassten äußeren Parameterwerts, wie beispielsweise der Außentemperatur, ausgewählt sein und auch während des Fahrbetriebs in regelmäßigen Abständen ansprechend auf eventuelle Außentemperaturänderungen angepasst werden. Anschließend wird das Gebläse 38 geschwindigkeitsabhängig, d.h. abhängig vom Ausgangssignal des Sensors 22 zum Erfassen der Fahrgeschwindigkeit, angesteuert, d.h. je größer die Fahrgeschwindigkeit ist, desto höher wird die Gebläsespannung und damit die Lüfterdrehzahl n gewählt. Dabei kann beispielsweise ein lineare Kennlinie verwendet werden, d.h. die Lüfterdrehzahl n wird linear entsprechend der Erhöhung der Fahrgeschwindigkeit erhöht.

Dadurch, dass die Steuereinrichtung 24 das Gebläse wird in Fig. 2 veranschaulicht ansteuert, wenn ein Einschaltsignal vorliegt, erfolgt erfindungsgemäß zunächst eine sanfte Belüftung, durch die die zuerst schwache Aufheizung am Heizelement 39 optimal für die Erwärmung des Luftstroms genutzt wird. Dadurch entsteht schon unmittelbar nach dem Einschalten der Luftversorgungseinrichtung ein zwar sanfter, aber schon angenehm warmer Luftstrom; es tritt kein anfängliches Zugempfinden mehr auf.

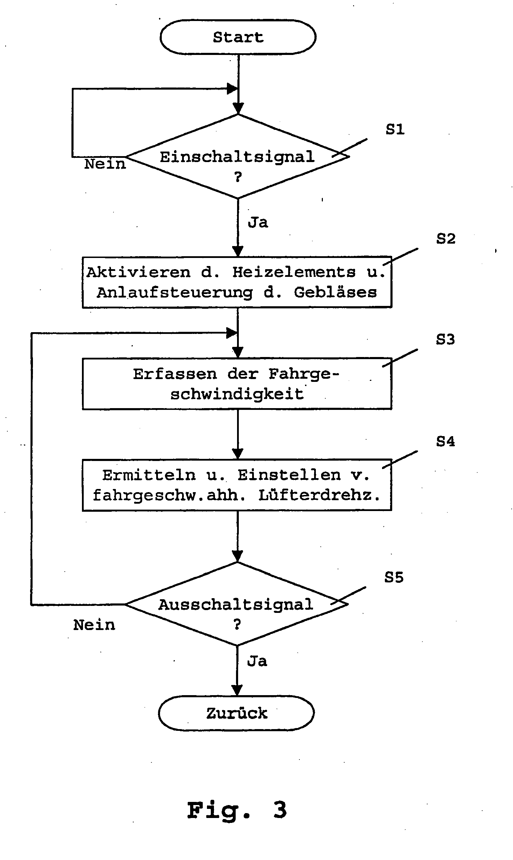

Nachstehend wird nun unter Bezugnahme auf Fig. 3 und 4 auf den Ablauf des erfindungsgemäßen Verfahrens zum Betreiben einer Luftversorgungseinrichtung für eine Fahrzeugsitz eingegangen.

In einem ersten Schritt S1 wird zunächst überprüft, ob ein Einschaltsignal für eine Luftversorgungseinrichtung für einen Fahrzeugsitz vorliegt. Wenn dies nicht der Fall ist, wird zum Beginn zurückgekehrt. Wenn jedoch in Schritt S1 erkannt wird, dass ein Einschaltsignal für die Luftversorgungseinrichtung für einen Fahrzeugsitz vorliegt, wird zu einem Schritt S2 fortgeschritten, in dem das Heizelement 39 sowie eine Anlaufsteuerung des Gebläses 38 aktiviert werden.

Die Anlaufsteuerung des Gebläses 38 ist in Fig. 4 genauer veranschaulicht. Zunächst wird in einem Schritt S2a das Gebläse 38 durch die Steuereinrichtung 24 mit einem kurzen hohen Spannungspuls beaufschlagt, der gerade ausreichend hoch und lang ist, um das Gebläse 38 zum Anlaufen zu bringen. Anschließend wird in einem Schritt S2b die Ansteuerspannung des Gebläses 38 bis auf ein Betriebsminimum reduziert, so dass das Gebläse 38 bei einer minimalen Lüfterdrehzahl nₘᵢₙ betrieben wird. Diese Ansteuerspannung wird für einen vorbestimmten Zeitraum T1 konstant gehalten, dessen Länge der Zeitdauer entspricht, die erforderlich ist, bis das Heizelement 39 seine volle Heizleistung erreicht hat. Wenn der vorbestimmte Zeitraum T1 verstrichen ist, wird in Schritt S2c die Ansteuerspannung des Gebläses 38 und damit die Lüfterdrehzahl n auf einen vorbestimmten Arbeitspunkt G₀ hochgefahren.

Dieser vorbestimmte Arbeitspunkt G₀ kann in nicht gezeigten Schritten ausgewählt und aktualisiert werden. Dazu kann ein äußerer Parameterwert, wie beispielsweise die Außentemperatur, erfasst und entsprechend dieser erfassten Außentemperatur ein Arbeitspunkt G₀ aus vorabgespeicherten Arbeitspunkten ausgewählt werden. Zudem kann eine Aktualisierung des Arbeitspunkts G₀ dadurch erfolgen, dass während des Fahrbetriebs in regelmäßigen Abständen überprüft wird, ob eine Parameteränderung, d.h. beispielsweise Außentemperaturänderung vorliegt, und, wenn dies der Fall ist eine Anpassung des Arbeitspunkts erfolgt.

Ausgehend von diesem vorbestimmten Arbeitspunkt G₀ erfolgt dann in den in Fig. 3 gezeigten nachfolgenden Schritten S3 bis S5 ein Erfassen der Fahrgeschwindigkeit (S3) sowie ein Ermitteln und Einstellen der Lüfterdrehzahl n abhängig von der Fahrgeschwindigkeit (S4), derart, dass durch den durch die Luftversorgungseinrichtung für einen Fahrzeugsitz erzeugten Luftstrom Turbulenzen im Kopf- und Nackenbereich des Sitzinsassen kompensiert oder zumindest vermindert werden. Die Schritte S3 und S4 werden dabei solange wiederholt, bis in Schritt S5 erkannt wird, dass ein Abschaltsignal für die Luftversorgungseinrichtung vorliegt.

## Patentansprüche

1. Luftversorgungseinrichtung für einen Fahrzeugsitz (12) mit einer im oberen Bereich des Fahrzeugsitzes (12) anordbaren Luftausströmöffnung (18), über die der Kopf-, Schulter- und Nackenbereich des Sitzinsassen zur Verminderung von unerwünschten Zuglufterscheinungen mit einem Luftstrom (L) beaufschlagbar ist, und wobei der Luftstrom (L) mittels einer Steuereinrichtung (24) durch Regelung einer Lüfterdrehzahl (n) eines Gebläses (38) regelbar und über ein Heizelement (39) erwärmbar ist,
**dadurch gekennzeichnet,**
**dass**
die Steuereinrichtung (24) derart ausgebildet ist, dass ansprechend auf ein Einschaltsignal für die Luftversorgungseinrichtung gleichzeitig das Heizelement (39) eingeschaltet und eine Anlaufsteuerung für das Gebläse (38) durchgeführt wird, durch die das Gebläse (38) für einen vorbestimmten Zeitraum mit minimaler Lüfterdrehzahl (nₘᵢₙ) betrieben und anschliessend auf einen vorbestimmten Arbeitspunkt (G₀) hochgefahren wird, bevor eine Regelung der Lüfterdrehzahl (n) in Abhängigkeit von der Fahrgeschwindigkeit erfolgt.

2. Luftversorgungseinrichtung nach Anspruch 1,
**dadurch gekennzeichnet, dass**
die Anlaufsteuerung des Gebläses (38) derart ausgebildet ist, das Gebläse (38) zum Anlauf mit einem kurzen hohen Spannungspuls beaufschlagt, anschließend für einen vorbestimmten Zeitraum (T1) auf niedrigster Lüfterdrehzahl (nₘᵢₙ) betrieben, dann auf einen vorbestimmten Arbeitspunkt (G₀)hochgefahren wird.

3. Luftversorgungseinrichtung nach Anspruch 2,
**dadurch gekennzeichnet,**
**dass**
der kurze hohe Spannungspuls derart ausgelegt ist, dass er gerade zum Anlaufenlassen des Gebläses (38) ausreicht.

4. Luftversorgungseinrichtung nach Anspruch 1 oder 2,
**dadurch gekennzeichnet, dass**
der vorbestimmte Zeitraum (T1) derart ausgelegt ist, dass innerhalb dieses Zeitraums das Heizelement (39) vollständig aufgeheizt werden kann.

5. Luftversorgungseinrichtung nach Anspruch 2,
**dadurch gekennzeichnet, dass**
die Steuereinrichtung (24) den vorbestimmten Arbeitspunkt (G₀) abhängig von einer ermittelten Außentemperatur wählt und in regelmäßigen Abständen eine Neuermittlung erfolgt.

6. Verfahren zum Betreiben einer Luftversorgungseinrichtung für einen Fahrzeugsitz (12) mit einer im oberen Bereich des Fahrzeugsitzes (12) anordenbaren Luftausströmöffnung (18), über die der Kopf-, Schulter- und Nackenbereich des Sitzinsassen zur Verminderung von unerwünschten Zuglufterscheinungen mit einem Luftstrom (L) beaufschlagbar ist, und wobei der Luftstrom (L) mittels einer Steuereinrichtung (24) durch Regelung einer Lüfterdrehzahl (n) eines Gebläses (38) regelbar und über ein Heizelement (39) erwärmbar ist,
**gekennzeichnet durch** die folgenden Schritte, (S1) Erfassen, ob ein Einschaltsignal für die Luftversorgungseinrichtung vorliegt,
wenn kein Einschaltsignal vorliegt, Rückkehr zum Beginn, (S2) wenn in S1 erfasst wird, dass ein Einschaltsignal vorliegt, Aktivieren des Heizelements (39) und gleichzeitig Durchführen einer Anlaufsteuerung des Gebläses (38), **durch** die das Gebläse (38) für einen vorbestimmten Zeitraum (T1) mit minimaler Lüfterdrehzahl (nₘᵢₙ) betrieben und anschließend auf einen vorbestimmten Arbeitpunkt (G₀) hochgefahren wird, anschließend (S3) Erfassen einer Fahrgeschwindigkeit des Fahrzeugs, (S₄) Ermitteln der Betriebsspannung des Gebläses und damit die Lüfterdrehzahl (n) abhängig von der Fahrgeschwindigkeit, und
(S5) Überprüfen, ob ein Ausschaltsignal vorliegt,
wenn dies der Fall ist, Rückkehr zum Beginn, ansonsten Rückkehr zu Schritt S3.

7. Verfahren zum Betreiben einer Luftversorgungseinrichtung für einen Fahrzeugsitz nach Anspruch 6,
**dadurch gekennzeichnet, dass**
in Schritt S2 beim Durchführen der Anlaufsteuerung des Gebläses (38)
zunächst das Gebläse (38) mit einem kurzen, hohen Spannungspuls beaufschlagt wird, damit ein Anlauf erfolgt,
anschließend das Gebläse (38) über einen vorbestimmten Zeitraum (T1) mit einer minimalen Betriebsspannung für eine minimale Lüfterdrehzahl (nₘᵢₙ) angesteuert wird, nach Ablauf des vorbestimmten Zeitraums das Gebläse (38) mit einer zunehmenden Betriebsspannung angesteuert wird, so dass die Lüfterdrehzahl (n) bis zu dem vorbestimmten Arbeitspunkt (G₀) hochgefahren wird.

8. Verfahren nach Anspruch 6 oder 7,
**gekennzeichnet durch** den weiteren Schritt (S01) automatisches Erfassen eines äußeren Parameterwerts,
(S02) Einstellen des Arbeitspunkts (G₀) des Gebläses (38) in Abhängigkeit von dem zumindest einen äußeren Parameterwert aus S01.

9. Verfahren nach Anspruch 8,
**dadurch gekennzeichnet, dass**
der in S01 automatisch erfasste äußere Parameterwert die Außentemperatur ist.

10. Verfahren nach Anspruch 8,
**dadurch gekennzeichnet, dass**
S01 und S02 während des Fahrbetriebs in regelmäßigen Abständen neu durchgeführt werden.

## Claims

1. Air supply system for a vehicle seat (12), with an outflow opening (18) that can be positioned in the upper area of the vehicle seat (12), through which the head, shoulder and neck area of the seat's occupant can be acted upon by an air flow (L) in order to reduce undesired drought effects, and such that the air flow (L) can be regulated by means of a control device (24) by regulating a fan speed (n) of a blower (38) and can be heated by a heating element (39),
**characterised in that**
the control device (24) is deigned such that in response to a signal switching on the air supply system, at the same time the heating element (39) is switched on and a starting control process for the blower (38) is initiated, by virtue of which the blower (38) is operated for a predetermined time at a minimum blower fan speed (nₘᵢₙ) and is then accelerated to a predetermined operating point (G₀), before the fan speed (n) is regulated as a function of the deriving speed.

2. Air supply system according to Claim 1,
**characterised in that**
the staring control profess for the blower (38) is designed such that to start the blower (38), it is acted upon by short high-voltage pulse, then operated for a predetermined time (T1) at the minimum fan speed (nₘᵢₙ), and then accelerated to a predetermined operating point (G₀).

3. Air supply system according to Claim 2,
**characterised in that**
the short high-voltage pulse is designed so that it is just sufficient to start up the blower (3).

4. Air supply system according to Claims 1 or 2,
**characterised in that**
the predetermined time (T1) is chosen such that the heating element (39) can be fully warmed up within the said time.

5. Air supply system according to Claim 2,
**characterised in that**
the control device (24) selects the predetermined operating paint (G₀) as a function of a measured external temperature, and a new determination takes place at regular intervals.

6. Method for operating an air supply system for a vehicle seat (12), with an outflow opening (18) that can be positioned in the upper area of the vehicle seat (12), through which the head, shoulder and neck area of the seat's occupant can be acted upon by an air flow (L) in order to reduce undesired draught effects, and such that the air flow (L) can be regulated by means of a control device (24) by regulating a fan speed (n) of a blower (38) and can be heated by a heating element (39),
**characterised by** the following steps:
(S1) detection of whether a signal to switch on the air supply system has been emitted, and if there has been no such signal, return to the beginning,
(S2) when a signal to switch on is detected in S1, the heating element (39) is activated and at the same time a starting control process of the blower (38) is initiated, by virtue of which the blower (38) is first operated at a minimum fan speed (nₘᵢₙ) for a predetermined time (T1) and is then accelerated to a predetermined operating point (G₀), and then
(S3) the driving speed of the vesicle is measured,
(S4) the operating voltage of the blower and hence the fan speed (n) are determined as a function of the driving speed, and
(S5) it is checked whether a signal to switch off has been emitted, and if so, return to the beginning, or if not, return to step (S3).

7. Method for operating an air supply system for a vehicle seat, according to Claim 6,
**characterised in that**
in step S2 when the starting control process of the blower (38) is carried out, first the blower (38) is acted upon by a short high-voltage pulse in order to start it, then the blower (38) is operated for a predetermined time (T1) at a minimum operating voltage which gives is minimum blower fan speed (nₘᵢₙ).
and at the end of the said predetermined time the blower (38) is supplied with an increasing operating voltage so that the fan speed accelerates up to the said predetermined operating point (G₀).

8. Method according to Claims 6 or 7,
**characterised by** the additional steps:
(S01) the value of an external parameter is determined automatically,
(S02) the operating point (G₀) of the blower (38) is adjusted as a function of the external parameter value determined in S01.

9. Method according to Claim 8,
**characterised in that**
the external parameter determined in S01 is the outside temperature.

10. Method according to Claim 8,
**characterised in that**
during driving operation S01 and S02 are carried out anew at regular intervals.

## Revendications

1. Dispositif d'alimentation en air pour un siège de véhicule (12) doté d'un orifice de sortie (18) d'air prouvant être situé dans la zona supérieure du siège du véhicule (12), par lequel un flux d'air (L) peut être envoyé sur la zone de la tête, de la nuque et des épaules de l'occupant du siège en vue de réduire les courants d'air indésirables, et le dit flux d'air (L) peut être régulé à l'aide d'un dispositif de commande (24) par régulation de la vitesse de rotation (n) d'un ventilateur (38) et peut être chauffé à l'aide d'un élément de chauffe (39), **caractérisé en ce que** le dispositif dé commande (24) est configure de manière à ce que l'élément de chauffe (39), an réaction à un signal d'activation pour le dispositif d'alimentation en air, se mette en marche et commande simultanément le démarrage du ventilateur (38), ledit ventilateur (38) fonctionne, pendant une période de temps prédéterminée, à une vitesse minimale et ensuite est monté en puissance jusqu'à un point de travail (G₀) prédéterminé, avant que la vitesse (n) du ventilateur ne soit ensuite réglée en fonction de la vitesse du véhicule.

2. Dispositif d'alimentation en air selon la revendication 1, **caractérisé en ce que** la commande de démarrage du ventilateur (38) est configurée de telle sorte que le ventilateur (38) reçoive une brève impulsion de tension élevée pour le démarrage, et fonctionne ensuite pendant une période de temps prédéterminée (T1) à une vitesse de ventilation la plus faible (nₘᵢₙ), puis est monté en puissance jusqu'à un point de travail (G₀) prédéterminé.

3. Dispositif d'alimentation en air selon la revendication 2, **caractérisé en ce que** la brève impulsion de tension élevée est dimensionnée de manière à ce qu'elle est suffisante pour faire démarrer le ventilateur (38).

4. Dispositif d'alimentation en air selon la revendication 1 ou 2, **caractérisé en ce que** la période de temps prédéterminée (T1) est dimensionnée de manière à ce qu'à l'intérieur de cette période de temps, l'élément de chauffe (39) puisse être entièrement chauffé.

5. Dispositif d'alimentation en air selon la revendication 2, **caractérisé en ce que** le dispositif de commande (24) sélectionne le point de travail (G₀) détecté en fonction d'une température extérieure déterminée et effectue à intervalles réguliers une nouvelle détention.

6. Procédé pour faire fonctionner un dispositif d'alimentation en air pour un siège de véhicule (12) doté d'un orifice de sortie (18) d'air pouvant être situé dans la zone supérieure du siège du véhicule (12), par lequel un flux d'air (L) peut être renvoyé sur la zone de la tête, de la nique et des épaules de l'occupant du siège en vue de réduire les courants d'air indésirables, le dit flux d'air (L) peut être régulé à l'aide d'un dispositif de commende (24) par régulation de la vitesse (n) d'un ventilateur (38) et peut être chauffé à l'aide d'un élément de chauffe (39), **caractérisée par** les étapes suivantes : (81) détecter si un signal d'activation est existant pour le dispositif d'alimentation en air, s'il n'existe aucun signal d'activation, retour au début (82), lorsqu'il est détecté dans 81 qu'un signal d'activation existe, activer l'élément de chauffe (39) et simultanément commander le démarrage du ventilateur (38), grâce auquel le ventilateur (38) fonctionne pendant une période de temps prédéterminée (T1) à une vitesse minimale (nₘᵢₙ) et ensuite est monté en puissance jusqu'à un point de travail (G₀) prédéterminé, ensuite (S3) détecter une vitesse du véhicule, (S4) déterminer la tension de fonctionnement du ventilateur et ainsi la vitesse (n) du ventilateur en fonction de la vitesse du véhicule, et (S5) contrôler si un signal de désactivation existe, si tel est le cas, retour au début, sinon retour à l'étape S3.

7. Procédé pour faire fonctionner un dispositif d'alimentation en air pour un siège de véhicule selon la revendication 6, **caractérisé en ce qu'**à l'étape S2 lors de l'exécution de la commande de démarrage du ventilateur (38) d'abord le ventilateur reçoit une brève impulsion de tension élevée pour qu'il démarre, ensuite le ventilateur (38) est commandé pendant une période de temps prédéterminée (T1) avec une tension de fonctionnement minimale à une vitesse minimale (nₘᵢₙ), une fois la période de temps prédéterminée écoulée, le ventilateur (38) est commandé avec une tension de fonctionnement croissante de sorte que la vitesse (n) du ventilateur est montée en puissance jusqu'à un peint de travail (G₀) prédéterminé.

8. Procédé selon la revendication 6 ou 7, **caractérisé par** l'autre étape (S01) : détection automatique d'une valeur de parcmètre extérieure (S02), établissement d'un point de travail (G₀) du ventilateur en fonction d'au moins une valeur de paramètre extérieure à partir de S01.

9. Procédé melon la revendication 8, **caractérisé en ce que** la valeur de paramètre extérieure détectée automatiquement dans S01 est la température extérieure.

10. Procédé selon la revendication 8, **caractérisé en ce que** les étapes S01 et S02 sont renouvelées à intervalles réguliers pensant la conduite.
